# EUROPÄISCHE PATENTSCHRIFT

(11) **EP 1 084 382 B1**
(45) Veröffentlichungstag und Bekanntmachung des Hinweises auf die Patenterteilung: **30.03.2005**
(21) Anmeldenummer: 99924739.8
(22) Anmeldetag: 01.04.1999
(51) Int. Cl.: G01D 3/02, G01D 18/00

(54) **Schaltung mit Korrekturspeicher, der über einen korrigierten Wandlerausgang ansteuerbar ist**
Circuit with correcting memory being controllable through a corrected transducer output
Circuit avec mémoire de correction qui est cotrôllable par la sortie corrigée d'un capteur

(30) Priorität: 05.06.1998 DE 19825159
(43) Veröffentlichungstag der Anmeldung: 21.03.2001
(73) Patentinhaber: ROBERT BOSCH GMBH, 70442 Stuttgart (DE)
(72) Erfinder: TANTEN, Leo, D-72768 Reutlingen (DE); OPITZ, Bernhard, D-72764 Reutlingen (DE)
(86) Internationale Anmeldenummer: PCT/DE1999/000985
(87) Internationale Veröffentlichungsnummer: WO 1999/064824

(56) Entgegenhaltungen:
- DE-C- 4 024 402
- GB-A- 2 218 213

## Beschreibung

### Stand der Technik

Die Erfindung geht aus von einer Schaltung bzw. einer Programmiereinrichtung bzw. einem Verfahren zur Programmierung nach der Gattung der unabhängigen Ansprüche. Es sind bereits Sensorauswerteschaltungen bekannt, die Abgleichmittel aufweisen. Diese werden, um Fertigungstoleranzen und Temperaturgänge der mit ihnen gepaarten Meßwertwandler auszugleichen, nach Paarung des Meßwertwandlers mit der Auswerteschaltung durch Speicherung bestimmter Größen, z. B. Offsets und Verstärkungen sowie Temperaturkoeffizienten, programmiert. Diese Informationen werden durch separate Schnittstellen am Bandende in die hierfür vorgesehenen Speicher geladen. Separate Schnittstellen erfordern dabei aufwendige Extrakontakte am Gehäuse der Auswerteschaltung bzw. des mit der Auswerteschaltung gepaarten Sensorelements, die für den Einsatz im Feld geschützt werden müssen, um insbesondere eine Robustheit gegen elektromagnetische Störungen zu gewährleisten.

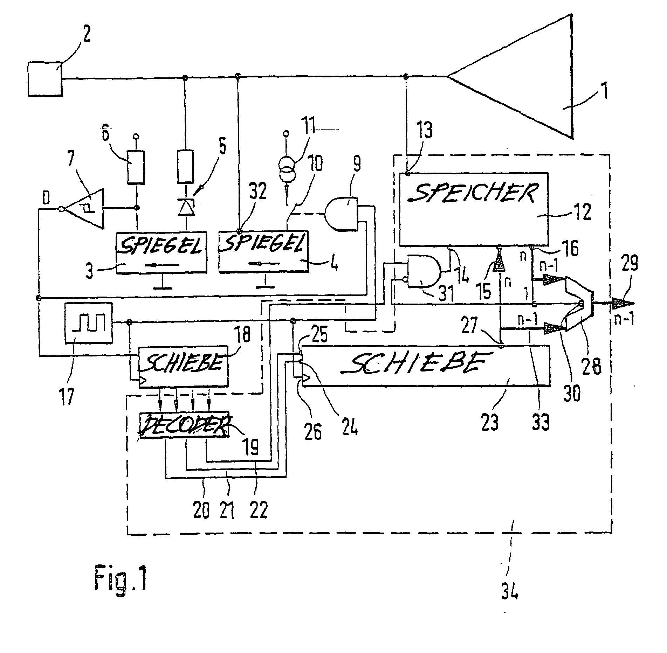

Eine separate Schnittstelle wird in einer Schaltung nach Figur 1 der GB-A-2 218 213 vermieden. Eine digitale Lösung ist in Figur 1 der PE-CI-40 24 402 angedeutet.

### Vorteile der Erfindung

Die erfindungsgemäße Schaltung nach dem Anspruch 1 hat den Vorteil, einen einfachen Bandendeabgleich von Sensorauswerteschaltungen, insbesondere Sensorauswerteschaltungen für Kraftfahrzeuganwendungen, ohne zusätzlichen konstruktiven Aufwand (ohne Mikrocontroler bzw. ohne zusätzliche Abgleichkontakte) zu gewährleisten. Dabei wird in vorteilhafter Weise eine bereits vorhandene Leitung, der Analogausgang, doppelt genutzt. Diese einfache abgleichbare Sensorauswerteschaltung ist insbesondere für Sensoren, die lediglich eine analoge Dreidrahtschnittstelle aufweisen, einsetzbar. Die erfindungsgemäße Schaltung ist überdies abwärtskompaktibel zu bereits vorhandenen Steuergeräten, die die Ausgangssignale von Sensorauswerteschaltungen weiter auswerten; es sind bei den Steuergeräten keinerlei Änderungen gegenüber einem einfach genutzten Analogausgang einer Dreidrahtschnittstelle notwendig (die Dreidrahtschnittstelle umfaßt dabei Masseanschluß, Versorgungsspannungsanschluß sowie Analogausgang).

Durch die in den abhängigen Ansprüchen aufgeführten Maßnahmen sind vorteilhafte Weiterbildungen und Verbesserungen möglich.

Besonders vorteilhaft ist eine Dreifachnutzung des Analogausgangs der Sensorauswerteschaltung, indem neben der Programmierbarkeit eines Speicherelements auch die Synchronisation einer externen Programmiereinrichtung mit dem Abgleichmittel über den Analogausgang gewährleistet ist.

Insbesondere vorteilhaft erweist sich eine Vierfachnutzung des Analogausgangs der Dreidrahtschnittstelle. Dies bedeutet eine erhebliche konstruktive Vereinfachung bei Gehäuse und Leiterplatte. Ferner können Bauteile, z. B. Kondensatoren, eingespart werden, die ansonsten notwendig sind, um EMV-Probleme durch Einstrahlung auf ansonsten zusätzlich erforderliche Programmieranschlüsse zu unterbinden. Da zusätzliche Bondlouds und ESD-Schutzstrukturen für die ansonsten erforderlichen zusätzlichen Prögrammierleitungen entfallen, wird Chipfläche eingespart.

### Zeichnung

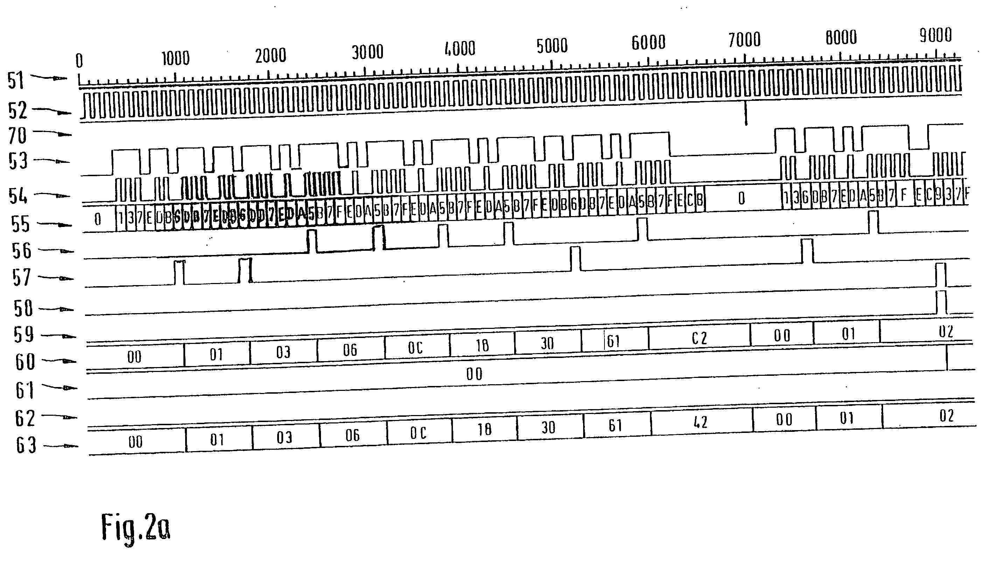

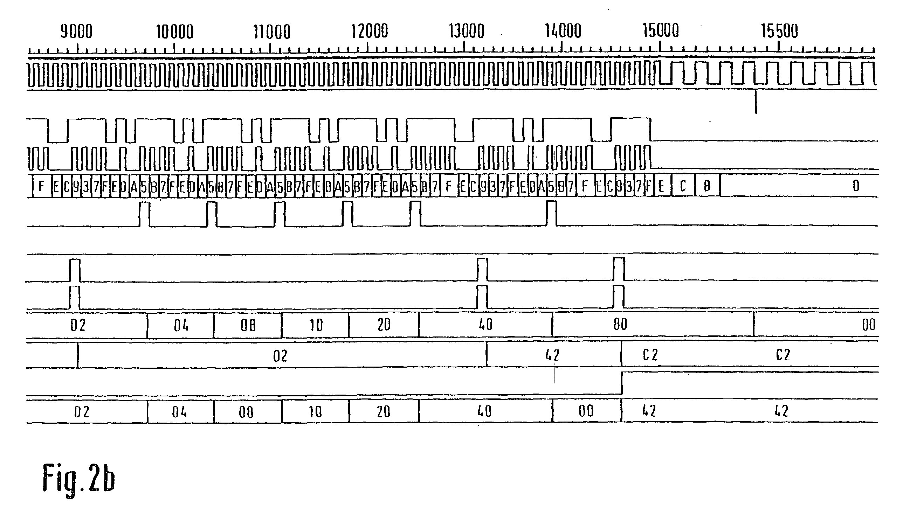

Ausführungsbeispiele der Erfindung sind in der Zeichnung dargestellt und in der nachfolgenden Beschreibung näher erläutert. Es zeigen Figur 1 eine Schaltung mit Vierfachnutzung eines Analogausgangs, Figur 2a und b ein Zeitablaufdiagramm der Programmierung eines Abgleichmittels.

### Beschreibung der Ausführuhgsbeispiele

Figur 1 zeigt einen Ausschnitt einer Sensorauswerteschaltung, die eine programmierbare Abgleicheinheit 34 aufweist. Die Abgleicheinheit 34 ist über den Abgleichausgang 29 mit dem Teil der Auswerteschaltung verbunden, der die Korrektur der analogen Rohsignale eines an die Auswerteschaltung angeschlossenen Meßwertwandlers durchführt. Der Analogausgang 1 der Sensorauswerteschaltung ist mit einer Ausgangskontaktierung 2 verbunden. Der Analogausgang 1 liefert beispielsweise Signale mit einem Spannungshub von 0 bis 5 Volt und ist gegenüber den positiven Pol der Spannungsversorgung von z. B. 16 Volt kurzschlußfest. Die Schaltung weist eine Bitübertragungseinheit, bestehend aus den Schaltungsteilen. 3, 5, 6, 7 und 18, auf. Dabei ist die Reihenschaltung eines Widerstands mit einer in Sperrichtung geschalteten Zenerdiode in den Eingangspfad einer ersten Stromspiegelschaltung 3 angeordnet, die ihrerseits mit Masse verbunden ist. Der Ausgang der ersten Stromspiegelschaltung 3 ist über einen Widerstand 6 mit der Spannungsversorgung verbunden, wobei zwischen der Stromspiegelschaltung 3 und dem Widerstand ein Spannungsabgriff angeordnet ist, der mit dem Eingang einer Schmitt-Triggerschaltung 7 verbunden ist. Der invertierte Ausgang D des Schmitt-Triggers 7 ist mit dem Eingang eines als Schieberegister ausgeführten 4-Bit-Befehlsregisters 18 verbunden. Ein Taktgenerator 17 ist mit dem Takteingang des Befehlsregister 18 verbunden. Der Analogausgang 1 ist ferner mit dem Ausgang 32 einer zweiten Stromspiegelschaltung 4 verbunden, deren Eingang über einen Schalter 10 und einer in Reihe geschalteten Stromquelle 11 mit der Spannungsversorgung verbunden ist. Der Schalter 10 wird von dem Ausgang eines Und-Gatters 9 angesteuert, wobei der erste Eingang des Und-Gatters 9 mit dem Ausgang D des Schmitt-Triggers 7 und der zweite Eingang mit dem Taktgenerator 17 verbunden ist. Der Analogausgang 1 ist ferner mit dem Programmierspannungseingang 13 eines programmierbaren Festwertspeichers 12, beispielsweise eines PROMs, verbunden. Die vier Ausgänge des Befehlsregisters 18 sind mit einem Befehlsdecoder 19 verbunden, der einen ersten, einen zweiten und einem dritten Befehlsausgang 20, 21 bzw. 22 aufweist. Der erste Befehlsausgang 20 ist mit dem Schiebe-0-Eingang 24 eines n-Bit-Schieberegisters 23 verbunden, der zweite Befehlsausgang 21 ist analog mit dem Schiebe-1-Eingang 25 des Schieberegisters 23 verbunden. Der Takteingang 26 des Schieberegisters 23 ist mit dem Taktgenerator 17 verbunden. Der n-Bit-Abgriff 27 des Schieberegisters 23 ist über eine n-Bit-Datenleitung mit dem n-Bit-Eingang 15 des Festwertspeichers 12 verbunden. Der Aktivierungseingang 14 des Festwertspeichers 12 ist mit dem Ausgang eines zweiten Und-Gatters 31 verbunden, dessen nichtinvertierter Eingang mit dem dritten Befehlsausgang 22 verbunden ist. Der n-Bit-Ausgang 16 des Festwertspeichers 12 ist an eine n-Bit-Datenleitung angeschlossen, wobei die (n-1)-niedrigstwertigsten Bitleitungen mit dem ersten Eingang einer Multiplexerweiche 28 verbunden sind. Das höchstwertigste Bit der n-Bit-Datenleitung ist einerseits mit dem invertierten Eingang des zweiten Und-Gatters 31 und andererseits mit dem Steuereingang 30 der Multiplexerweiche 28 verbunden. Der zweite Eingang der Multiplexerweiche 28 ist über einen Testbetriebspfad 33 mit den (n-1)-niedrigstwertigsten Bitanschlüssen des n-Bit-Abgriffs 27 des Registers 23 verbunden. Der Ausgang der Multiplexerweiche 28 ist mit dem Abgleichausgleich 29 verbunden und besteht aus n - 1 Leitungen.

Wird der Signalausgang 1 nicht belastet oder über die Ausgangskontaktierung 2 nach Masse kurzgeschlossen, so liegt am Ausgang D des Schmitt-Triggers 7 eine digitale 0 an; wird der Signalausgang 1 über die Ausgangskontaktierung 2 auf ein Potential von beispielsweise > 12 Volt gezogen, so liegt am Ausgang D eine digitale 1 an. Die über die Ausgangskontaktierung 2 einlesbare und am Ausgang D anliegende Bit-Information soll seriell in das Schieberegister 18 eingelesen werden. Die Taktinformation hierfür wird über die die Schaltungsteile 4, 9, 10, 11 und 17 aufweisende Taktübertragungseinheit zwischen der an der Ausgangskontaktierung 2 anliegenden Programmiereinrichtung und der Schaltung ausgetauscht. Dabei wird bei Anliegen einer digitalen 1 am Ausgang D über den zweiten Stromspiegel 4 ein mit dem Takt modulierter Strom auf die Ausgangskontaktierung 2 gegeben, der mit einer geeigneten Schaltung in der Programmiereinheit leicht zu detektieren ist. Mit einer handelsüblichen Counter-/Timerkarte kann die Programmiereinrichtung auf den internen Takt des Taktgenerators 17 einrasten, d. h. er mißt die Taktperiode und bestimmt die Phase. Bei ausreichender Stabilität des internen Taktes, was bei typischen Schieberegistertaktraten von 10 bis 100 KHz kein Problem darstellt, ist die Programmiereinrichtung in der Lage, Synchrondaten in ein Schieberegister zu schreiben. Die Bit-Signale werden im Ausführungsbeispiel in das Vier-Bit-Befehlsregister 18 geladen, d. h. eine Abfolge von vier Bits stellt ein Befehlswort dar. Die Bitkombination 0101 wird als Befehl "Schiebe 0", die Bitkombination 0110 als Befehl "Schiebe 1" und die Bitkombination 1001 als Befehl "Programmiere" interpretiert. Die Befehle stellen einen orthogonalen Befehlssatz in dem Sinne dar, als sich durch Eintakten einer mindestens 3 Takte langen Folge von entweder Nullen oder Einsen nach einer dieser Bitkombinationen keine der drei Kombinationen in dem Vier-Bit-Schieberegister 18 ergibt. Ferner ergibt sich auf dem Weg von einem nur mit Nullen oder nur mit Einsen gefüllten Schieberegister zu einem der drei Befehle kein anderer gültiger Befehl. Es muß also nur verlangt werden, daß vor und nach jedem Befehl für mindestens drei aufeinanderfolgende Takte derselbe logische Pegel am Ausgang D anliegt. Bei einem Schiebe-0-Befehl aktiviert der Decoder 19 den ersten Befehlsausgang 20, bei einem Schiebe-1-Befehl den zweiten Befehlsausgang 21 und bei einem Programmierbefehl den dritten Befehlsausgang 22. Das Aktivieren des ersten Befehlsausgangs 20 führt zum Eintakten einer 0, das Aktivieren des zweiten Befehlsausgangs 21 zum Eintakten einer 1 in das n-Bit breite Schieberegister 23. Im Normalbetrieb der Schaltung, d. h., wenn der Festwertspeicher 12 bereits programmiert ist, ist der Ausgang 16 des Festwertspeichers 12 über den Multiplexerweiche 28 mit dem Abgleichausgang 29 verbunden, so daß die im Festwertspeicher 12 gespeicherten Abgleichdaten in der mit dem Abgleichausgang 29 verbundenen Auswerteschaltung zur Auswertung der analogen hohen Sensorsignale verwendet werden können. Im hier beschriebenen Fall des Einlesens von Abgleichdaten jedoch ist der Abgleichausgang 29 noch mit dem Ausgang 27 des Schieberegisters 23 verbunden. Es können also über die Ausgangskontaktierung 2 Abgleichdaten in das Schieberegister 23 eingelesen werden, die über den Ausgang 29 testweise der Auswerteschaltung zur Verfügung gestellt werden. Dadurch können iterativ durch Messen des Ausgangssignals über die Ausgangskontaktierung 2 die Abgleichdaten im Schieberegister 23 noch variiert werden. Stehen die Abgleichdaten fest, so gibt das Schieberegister 23 die Bits an, die seriell durch beispielsweise Zenerzapping im Festwertspeicher 12 programmiert werden sollen. Der Testbetrieb wird dadurch ermöglicht, daß, solange weder der Befehl Schiebe 0 noch der Befehl Schiebe 1 initiiert wird, das Schieberegister 23 seinen Wert beibehält. Die vierte Nutzung der Ausgangsleitung erfolgt über den Programmierspannungseingang 13 des Festwertspeichers 12: über diesen Eingang wird dem Speicher 12 die notwendige Programmierenergie (Programmierspannung und Strom) zur Verfügung gestellt. Zum Beispiel im Fall des Zenerzappings als Speichertechnologie sind Spannungen'um 25 Volt und Ströme von mehreren 100 Milliampere notwendig. Dies ist wegen der geforderten Kurzschlußfestigkeit des analogen Ausgangs 1 realisierbar. Um zu verhindern, daß eine Programmierung einer logischen 1 über die Ausgangskontaktierung 2 bereits einen Programmiervorgang einleitet, wird zur Einleitung des Programmiervorgangs des Festwertspeichers 12 eine Aktivierung des dritten Befehlsausgangs 22 vorgesehen. Da die Bitkombination des Programmierbefehls, der die Aktivierung des dritten Befehlsausgangs 22 auslöst, mit einer 1 aufhört, kann diese 1 bereits Teil des von der an die Ausgangskontaktierung 2 angeschlossenen Programmiereinrichtung gelieferten Programmierpulses sein. Die Auswahl zwischen Testbetrieb und Normalbetrieb wird von einem im Festwertspeicher 12 abgelegten Bit bestimmt. Wird dieses Bit gleichzeitig verwendet, um das Einleiten eines Programmiervorgangs durch Aktivieren des dritten Befehlsausgangs 22 zu unterbinden, so kann eine unbeabsichtigte Umprogrammierung ausgeschlossen werden. Dazu muß das besagte Bit als letztes gesetzt werden. Dieses höchstwertigste Bit der n-Bits des Schieberegisters 23 reist dabei über das Und-Gatter 31 gleichsam die Brücke hinter sich ein, über die es in den Speicher 12 gelangt ist. Ferner wird die Multiplexerweiche 28 über den Steuereingang 30 auf den Ausgang des Festwertspeichers 12 geschaltet.

Die oben angegebenen Bitkombinationen für die Befehle Schiebe 0, Schiebe 1 und Programmiere stellen ein Beispiel dar. Auch andere Befehlssätze mit anderen Bitbreiten sind denkbar. Enthalten die Kodierungen jedes Befehls wie im genannten Beispiel mindestens zwei Einsen, so kann eine Synchronisation zwischen externer Programmiereinrichtung und elektronischer Schaltung nicht nur von einem zu übertragenden Datenpaket stattfinden, sondern auch zweimal während eines jeden übertragenden Befehls aufgefrischt werden, da bei einer am Ausgang D anliegenden 1 das Und-Gatter 9 den zweiten Stromspiegel 4 aktiviert. Je mehr Bits für die Kodierung der drei Befehle verwendet werden, desto sicherer ist die Programmierbarkeit der Schaltung gegen Störpulse gewappnet: Störpulse nämlich, die trotz des relativ großen Störabstands und der niedrigen Eingangsimpedanz als Digitalpulse zum Ausgang D gelangen, werden wegen der oben beschriebenen Redundanz des vorgeschlagenen Befehlsatzes in den meisten Fällen ohne Auswirkung bleiben. Somit wird eine höhere Ausbeute des Programmiervorgangs des Abgleichmittels 34 als bei heute üblichen Verfahren gewährleistet.

Die beschriebene Schaltung als separater Absatz kann in vorteilhafter Weise in monolithisch integrierter Form ausgeführt werden, insbesondere kann auch das Sensorelement mit der Auswerteeinheit monolithisch integriert sein.

Die Figuren 2a und b zeigen ein Zeitablaufdiagramm, wobei Figur 2b die zeitliche Fortsetzung des Diagramms der Figur 2a darstellt und teilweise mit der Darstellung in Figur 2a überlappt. Die Zeitskala 51 ist in Mikrosekunden angegeben und ab der Zeitmarke von 15 Millisekunden leicht gestreckt. Es sind nacheinander folgende Signale abgebildet: das vom Taktgenerator 17 gelieferte Taktsignal 52, ein Resetsignal 70, das bei einem Rückgang auf den Wert 0 einem kurzzeitigen Ausschalten der Versorgungsspannung der Schaltung entspricht, das am Ausgang D des Schmitt-Triggers 7 anliegende Bitsignal 53, das am Ausgang 32 des zweiten Stromspiegels 4 anliegende Stromsignal 54, der Befehlsregisterinhalt 55 des Schieberegisters 18, das am ersten Befehlsausgang 20 anliegende Schiebe-0-Signal 56, das am zweiten Befehlsausgang 21 anliegende Schiebe-1-Signal 57, das am dritten Befehlsausgang 22 anliegende Programmiersignal 58, das am Aktivierungseingang 14 des Festwertspeichers 12 anliegende Aktiviersignal 59, der Schieberegisterinhalt 60 des Schieberegisters 23, der Speicherwert 61, der im Festwertspeicher 12 abgelegt ist, das am Steuereingang 30 der Multiplexerweiche 28 anliegende Steuersignal 62, das dem höchstwertigsten Bit des Speicherwerts 61 entspricht, und das am Abgleichausgang 29 anliegende Abgleichsignal 63. Bei den dargestellten Signalen sind 1-Bit-Signale in Wellenform dargestellt, mehrere Bit breite Signale sind mit Zahlen in hexadezimaler Darstellung versehen.

In dem gewählten Beispiel ist für die Zahl n der Wert 8 gewählt, und es soll die 7 Bit breite Abgleichinformation auf den willkürlichen Wert 1000010, das entspricht in hexadezimaler Darstellung dem Wert 42, eingestellt werden, und zwar zunächst im reversiblen Testbetrieb (bis zum Zeitpunkt T = 7 Millisekunden), um dann in einer Programmiersequenz (von T = 7 Millisekunden bis T = 15,4 Millisekunden) fest für den Normalbetrieb (ab T = 15,4 Millisekunden) im als PROM ausgestalteten Festwertspeicher abgespeichert zu werden. Die Taktperiode beträgt 100 mikrosekunden, der verwendete Befehlsatz entspricht dem in der Beschreibung zur Figur 1 erläuterten. Nach jedem Befehl bleibt das Bitsignal 53 für drei Taktperioden auf 1, um sicherzustellen, daß keine ungewollten Befehle ausgelöst werden. Zu allen Zeiten, in denen das Bitsignal 53 auf 1 ist, kann eine an der Ausgangskontaktierung 2 angeschlossene exterene Programmiereinrichtung am Stromsignal 54 den Takt erkennen um sich zu synchronisieren. Im Zeitraum von T = 0 bis T = 6 Millisekunden wird über das Bitsignal 53 das Befehlsregister 2 mal auf 6 (Schiebe-1-Befehl), viermal auf fünf (Schiebe-0-Befehl), dann wieder einmal auf 6 und einmal auf fünf eingestellt, so daß die Bitfolge 11000010, das entspricht in hexadezimaler Schreibweise C2, in das Schieberegister 23 geschoben wird. Weil der Steuereingang 30 wie der gesamte Inhalt des noch unprogrammierten Proms 0 ist, zeigt der Abgleichausgang 29 die unteren 7 Bit des Schieberegisters 23 also 1000010, das entspricht in hexadezimaler Schreibweise 42, wie gewünscht an. Dies bleibt im restlichen Testbetrieb so, also bis zum Reset zum Zeitpunkt T = 7 Millisekunden. Im Programmierbetrieb (ab T = 8 Millisekunden) wird eine 1 und eine 0 in das Schieberegister 23 geschoben. Wenn also das Schieberegisterinhalt 60 den Stand 02 hat, was der Bitfolge 00000010 entspricht, wird mit dem Befehl 9 zum Zeitpunkt T = 9 Millisekunden das Bit Nr. 1 im Festwertspeicher 12 programmiert. Nach weiteren fünf Nullen, die in das Schieberegister 23 geschoben werden, steht zum Zeitpunkt T = 13,1 Millisekunden der Wert 40, das entspricht der Bitfolge 01000000, im Schieberegister. Ein weiterer Programmierbefehl setzt das entsprechende Bit Nr. 6 im Festwertspeicher 12. Schließlich kommt noch eine 0 und das Bit Nr. 7 wird zum Zeitpunkt T = 14,65 Millisekunden programmiert. Dieses letzte Bit ist gleichzeitig das Selektionsbit, das über den Steuereingang 30 die Multiplexerweiche umschaltet, um fortan am Abgleichausgang 29 den Inhalt der 7 niedrigstwertigsten Bits des Festwertspeichers 12 auszugeben, der im gewählten Beispiel dem Wert 42 hat. Dies wird auch durch den Reset zum Zeitpunkt T = 15,4 Millisekunden nicht verändert und würde auch durch Ab- und wieder Einschalten der Versorgungsspannung nicht verändert werden. Sollte im Normalbetrieb noch einmal der Befehl "Programmiere" ausgelöst werden, so würde der Aktivierungseingang 14 des Festwertspeichers 12 trotzdem nicht angesteuert werden, weil das im Festwertspeicher 12 abgespeicherte Selektionsbit auf 1 steht. Deshalb kann es nicht zu einer Umprogrammierung kommen.

Das im Beispiel beschriebene Verfahren, bei dem mit jedem Programmierbefehl immer nur 1 Bit programmiert wird, ist an die Erfordernisse von durch Zappingverfahren realisierte programmierbare Festwertspeicher angepasst. Bei anderen Techniken, etwa EPROMs oder EEPROMs, können auch mehrere Bits parallel programmiert werden, was den Programmiervorgang natürlich verkürzt.

In einem weiteren Ausführungsbeispiel weist das Abgleichmittel eine Taktübertragungseinheit (4, 9, 10, 11, 17) auf, die mit der Ausgangskontaktierung (2) verbunden ist und die derart ausgebildet ist, daß sie das Abgleichmittel mit einer an der Ausgangskontaktierung (2) anschließbaren Programmiereinrichtung synchronisiert.

## Patentansprüche

1. Schaltung zur Auswertung elektrischer Signale, insbesondere Sensorsignale, mit einer Auswerteeinheit, wobei die Auswerteeinheit einen zur Ausgabe ausgewerteter Signale dienenden Analogausgang (1) aufweist, wobei der Analogausgang mit einer Ausgangskontaktierung (2) verbunden ist, mit mindestens einem Abgleichmittel (3, 5, 6, 7, 18, 4, 9, 10, 11, 17, 34) zum Abgleich der Signale, wobei das Abgleichmittel mindestens ein Speicherelement (12) zum Speichern von Abgleichwerten aufweist, **dadurch gekennzeichnet, daß** der Analogausgang (1) kurzschlußfest und das Abgleichmittel so ausgestaltet ist, daß das Speicherelement (12) über die Ausgangskontaktierung (2) programmierbar ist, wobei das Abgleichmittel eine Taktübertragungseinheit (4, 9, 10, 11, 17) aufweist, die mit der Ausgangskontaktierung (2) verbunden ist und die derart ausgebildet ist, daß sie
- das Abgleichmittel mit einer an der Ausgangskontaktierung (2) anschließbaren Programmiereinrichtung bzw.
- eine an der Ausgangskontaktierung (2) anschließbaren Programmiereinrichtung mit dem Abgleichmittel
synchronisiert, wobei das Abgleichmittel eine Bitübertragungseinheit (3, 5, 6, 7, 18) aufweist, wobei deren Eingang mit der Ausgangskontaktierung verbunden ist und wobei über deren Ausgang das Speicherelement (12) mit Speicherwerten belegbar ist.

2. Schaltung nach Anspruch 1, **dadurch gekennzeichnet, daß** die Taktübertragungseinheit einen Taktgenerator (17) aufweist.

3. Schaltung nach einem der vorhergehenden Ansprüche, **dadurch gekennzeichnet, daß** das Speicherelement (12) einen Programmierspannungseingang aufweist, wobei der Programmierspannungseingang mit der Ausgangskontaktierung (2) verbunden ist.

4. Schaltung nach einem der vorhergehenden Ansprüche, **dadurch gekennzeichnet, daß** die Schaltung monolithisch integriert ist.

5. Schaltung nach einem der vorhergehenden Ansprüche, **dadurch gekennzeichnet, daß** die Auswerteeinheit mit einem Sensorelement monolithisch integriert ist.

6. Schaltung nach einem der vorhergehenden Ansprüche, **dadurch gekennzeichnet, daß** das Speicherelement ein Zener-Zapping-Bauelement ist.

## Claims

1. Circuit for evaluating electrical signals, in particular sensor signals, having an evaluation unit, the evaluation unit having an analogue output (1) serving for outputting evaluated signals, the analogue output being connected to an output contact-connection (2), having at least one adjustment means (3, 5, 6, 7, 18, 4, 9, 10, 11, 17, 34) for adjusting the signals, the adjustment means having at least one memory element (12) for storing adjustment values, **characterized in that** the analogue output (1) is short-circuit-resistant and the adjustment means is configured such that the memory element (12) is programmable via the output contact-connection (2), the adjustment means having a clock transfer unit (4, 9, 10, 11, 17), which is connected to the output contact-connection (2) and which is designed in such a way that it synchronizes
- the adjustment means with a programming device that can be connected to the output contact-connection (2), or
- a programming device that can be connected to the output contact-connection (2) with the adjustment means,
the adjustment means having a bit transfer unit (3, 5, 6, 7, 18), the input of which is connected to the output contact-connection and via the output of which the memory element (12) can be occupied with memory values.

2. Circuit according to Claim 1, **characterized in that** the clock transfer unit has a clock generator (17).

3. Circuit according to one of the preceding claims, **characterized in that** the memory element (12) has a programming voltage input, the programming voltage input being connected to the output contact-connection (2).

4. Circuit according to one of the preceding claims, **characterized in that** the circuit is monolithically integrated.

5. Circuit according to one of the preceding claims, **characterized in that** the evaluation unit is monolithically integrated with a sensor element.

6. Circuit according to one of the preceding claims, **characterized in that** the memory element is a zener zapping component.

## Revendications

1. Circuit d'exploitation de signaux électriques, notamment de signaux de capteur, comprenant une unité de traitement munie d'une sortie analogique (1) pour l'émission de signaux d'exploitation,
la sortie analogique étant reliée à un contact de sortie (2), au moins un moyen de compensation (3, 5, 6, 7, 18, 4, 9, 10, 11, 17, 34) pour compenser les signaux, le moyen de compensation ayant au moins un élément de mémoire (12) pour enregistrer des valeurs de compensation,
**caractérisé en ce que**
la sortie analogique (1) est protégée contre les courts-circuits et le moyen de compensation est conçu pour que l'élément de mémoire (12) puisse être programmé par le contact de sortie (2),
le moyen de compensation comportant une unité de transmission de cadence (4, 9, 10, 11, 17) reliée au contact de sortie (2) et réalisée pour :
- synchroniser le moyen de compensation à une installation de programmation susceptible d'être reliée au contact de sortie (2), ou
- synchroniser une installation de programmation reliée au contact de sortie (2) sur le moyen de compensation,
le moyen de compensation comportant une unité de transmission de bits (3, 5, 6, 7, 18), son entrée étant reliée au contact de sortie et sa sortie pouvant alimenter l'élément de mémoire (12) avec des valeurs à enregistrer.

2. Circuit selon la revendication 1,
**caractérisé en ce que**
l'unité de transmission de cadence est un générateur de cadence (17).

3. Circuit selon l'une des revendications précédentes,
**caractérisé en ce que**
l'élément de mémoire (12) comporte une entrée de tension de programmation, reliée au contact de sortie (2).

4. Circuit selon l'une des revendications précédentes,
**caractérisé en ce que**
le circuit est intégré de manière monolithique.

5. Circuit selon l'une des revendications précédentes,
**caractérisé en ce que**
l'unité d'exploitation est intégrée de manière monolithique à un élément de capteur.

6. Circuit selon l'une des revendications précédentes,
**caractérisé en ce que**
l'élément de mémoire est un composant Zener-Zapping.
